# EUROPÄISCHE PATENTSCHRIFT

(11) **EP 1 525 124 B1**
(45) Veröffentlichungstag und Bekanntmachung des Hinweises auf die Patenterteilung: **27.08.2008**
(21) Anmeldenummer: 03706264.3
(22) Anmeldetag: 30.01.2003
(51) Int. Cl.: B60S 1/34

(54) **SCHEIBENWISCHER FÜR FAHRZEUGSCHEIBEN**
WINDOW WIPER FOR VEHICLE WINDOWS
ESSUIE-GLACE POUR VEHICULE

(30) Priorität: 25.06.2002 DE 10228349
(43) Veröffentlichungstag der Anmeldung: 27.04.2005
(73) Patentinhaber: ROBERT BOSCH GMBH, 70442 Stuttgart (DE)
(72) Erfinder: MAYER, Stephan, 76137 Karlsruhe (DE); RITT, Jean-Marc, F-67000 Strasbourg (FR)
(86) Internationale Anmeldenummer: PCT/DE2003/000249
(87) Internationale Veröffentlichungsnummer: WO 2004/000614

(56) Entgegenhaltungen:
- EP-A- 0 798 184
- WO-A-02/096729
- DE-A- 19 615 867
- FR-A- 2 762 567
- US-A- 4 170 804
- US-A- 5 423 106

## Beschreibung

### Stand der Technik

Die Erfindung geht aus von einem Scheibenwischer für Fahrzeugscheiben nach dem Oberbegriff des Anspruchs 1.

Scheibenwischeranlagen in Kraftfahrzeugen weisen mindestens einen Scheibenwischer auf, der von einem elektrischen Antriebsmotor über ein Wischergestänge in eine hin- und hergehende Schwenkbewegung versetzt wird. Der Scheibenwischer hat einen Wischerarm oder Wischerhebel, der an seinem einen Ende eine Aufnahme für ein Wischblatt trägt und an seinem anderen Ende über ein Gelenk mit einem Befestigungsteil verbunden ist. Das Befestigungsteil ist mit einer Abtriebswelle des Antriebsgestänges drehfest verbunden und überträgt somit die Antriebsbewegung auf den Wischerarm, der das Wischblatt über die Fahrzeugscheibe führt. Eine Zugfeder, die einerseits an dem Wischerarm und andererseits an dem Befestigungsteil festgelegt ist, erzeugt eine das Wischblatt mit seiner Wischleiste gegen die Fahrzeugscheibe andrückende Anpreßkraft. Der Wischerarm ist üblicherweise aus Blech und das Befestigungsteil aus Blech oder einem Aluminium-Zink-Druckguß gefertigt. Die gelenkige Verbindung der beiden Bauteile erfolgt mittels Bohrungen, die in an den einander zugekehrten Enden von Wischerarm und Befestigungsteil seitlich vorstehenden und einander überlappenden oder übergreifenden Wangen eingebracht sind, mit eingesetzten Kunststoffbuchsen und mittels eines durchgehenden, durch die Kunststoffbuchsen hindurch geführten, abgesetzten Nietstifts, der nach der Montage einseitig getaumelt wird.

Ein bekannter Scheibenwischer für Fahrzeuge (US-A-5 423 106) weist einen zur Schwenkbewegung antreibbaren Befestigungsteil, dort Antriebskopf genannt, und einen Wischerarm auf. Befestigungsteil und Wischerarm sind gelenkig miteinander verbunden, wobei die Gelenkachse rechtwinklig zu der Antriebsachse des Befestigungsteils ausgerichtet ist. Zur Herstellung der Gelenkverbindung übergreift der Befestigungsteil mit zwei einander gegenüberliegenden Wangen das Ende des Wischerarms. Von den beiden Wangen steht jeweils ein Gelenkzapfen so ab, dass die beiden Gelenkzapfen einander zugekehrt sind und miteinander fluchten. In dem dem Befestigungsteil zugekehrten Ende des Wischerarms ist ein Einschnitt eingearbeitet, der einen halbkreisförmigen Grund aufweist. Die Höhe des Einschnitts ist wenig größer als der Außendurchmesser der Rundzapfen am Befestigungsteil. Bei zusammengesetztem Scheibenwischer greifen die Rundzapfen des Befestigungsteils in den Einschnitt ein und werden von einer schraubenförmigen Zugfeder gegen den halbkreisförmigen Grund gezogen. Die beiden Rundzapfen sind durch eine Stange miteinander verbunden, die exzentrisch zu den Rundzapfen angeordnet ist und zusammen mit einer im Einschnitt angeordneten Knacke verhindert, dass sich beim Schwenken des Wischerarms die Rundzapfen aus der Vertiefung herausschieben und sich dadurch die Gelenkverbindung unbeabsichtigt löst.

### Vorteile der Erfindung

Der erfindungsgemäße Scheibenwischer mit den Merkmalen des Anspruchs 1 hat den Vorteil eines recht geringen Montageaufwands, da die beiden Bauteile Wischerarm und Befestigungsteil sehr leicht gefügt werden können, wobei das Fügen von Hand möglich ist. Beim Fügen wird gleichzeitig die Gelenkverbindung zwischen den Bauteilen hergestellt. Da zur Herstellung der Gelenkverbindung kein Nietvorgang erforderlich ist, kann bei der Montage keine Schädigung der Oberflächenbeschichtung der Bauteile herbeigeführt werden, so dass durch solche Schädigungen verursachte Korrosionen am Scheibenwischer vermieden werden. Da die Rundzapfen für die Gelenkbildung von der Innenfläche der Wangen abstehen, sind die Außenflächen des Scheibenwischers glatt und ohne vorstehende Teile, wie Nietköpfe, so dass das Aussehen des Scheibenwischers verbessert ist und auch keine - wenn auch geringe - Verletzungsgefahr durch vorstehende Teile besteht. Dadurch, dass die beiden in Querrichtung miteinander fluchtenden Rundzapfen nur relativ kurz sein müssen und nur unwesentlich größer als die Stärke der von ihnen durchdrungenen Wangen sind, ist im Innern des Wischerarms im Bereich der Gelenkverbindung genügend Raum für den Einbau einer geraden Zugfeder geschaffen, so dass auf die Verwendung der teureren Stielösenfedern oder der zusätzlichen C-Bügel zum Umgehen des bei dem bekannten Scheibenwischer vorhandenen Nietstifts verzichtet werden kann.

Durch die Gleitscheiben mit in die Wangenausnehmungen eintauchendem Umlaufrand wird der Gelenkverschleiß vermindert und können die auf das Gelenk wirkenden Momente bei der Schwenkbewegung des Scheibenwischers auf einer durch den Umlaufrand gebildeten, größeren Stützfläche aufgenommen werden.

Durch die in den weiteren Ansprüchen aufgeführten Maßnahmen sind vorteilhafte Weiterbildungen und Verbesserungen des im Anspruch 1 angegebenen Scheibenwischers möglich.

Gemäß einer vorteilhaften Ausführungsform der Erfindung ist der Umlaufrand von den Seitenwänden einer in die U-förmige Ausnehmung eingeschobenen oder eingeklipsten, rinneartigen Vertiefung in der Gleitscheibe gebildet. Die rinnenartige Vertiefung ist an einem Ende bogenförmig verschlossen, und zwar am Grunde der U-förmigen Ausnehmung, und läuft am anderen Ende frei aus. Vorzugsweise ist am bogenförmig verschlossenen Ende der Vertiefung im Boden der Vertiefung eine kreisrunde Einsenkung eingeformt, in die jeweils einer der Rundzapfen mit seinem freien Ende einzutauchen vermag, so dass bei der Montage des Wischerarms noch vor Einhängen der Zugfeder eine richtige Positionierung der beiden Bauteile zueinander erreicht wird.

Gemäß einer vorteilhaften Ausführungsform der Erfindung ist zumindest das Befestigungsteil aus vorverzinktem Blech hergestellt, so dass auf das Aufbringen einer Korrosionsschutzschicht verzichtet werden kann.

### Zeichnung

Die Erfindung ist anhand eines in der Zeichnung dargestellten Ausführungsbeispiels in der nachfolgenden Beschreibung näher erläutert. Es zeigen in perspektivischer Darstellung:
- Fig. 1: ausschnittweise einen Scheibenwischer mit Befestigungsteil und abschnittweise dargestelltem Wischerarm,
- Fig. 2: das Befestigungsteil des Wischerarms in Fig. 1,
- Fig. 3: das befestigungsteilseitige Ende des Wischerarms des Scheibenwischers in Fig. 1,
- Fig. 4: eine gleiche Darstellung wie in Fig. 3 mit in das Ende des Wischerarms eingesetzten Gleitscheiben,
- Fig. 5: ausschnittweise eine Unteransicht des Scheibenwischers im Bereich der Gelenkverbindung zwischen Befestigungsteil und Wischerarm,
- Fig. 6: eine gleiche Darstellung wie in Fig. 5 bei hochgeschwenktem Wischerarm.

### Beschreibung des Ausführungsbeispiels

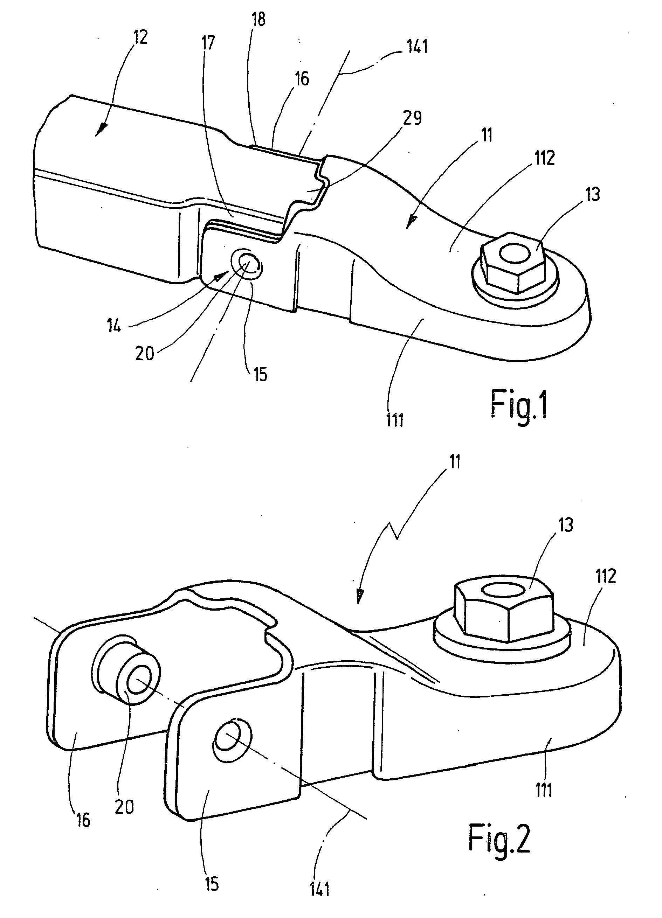

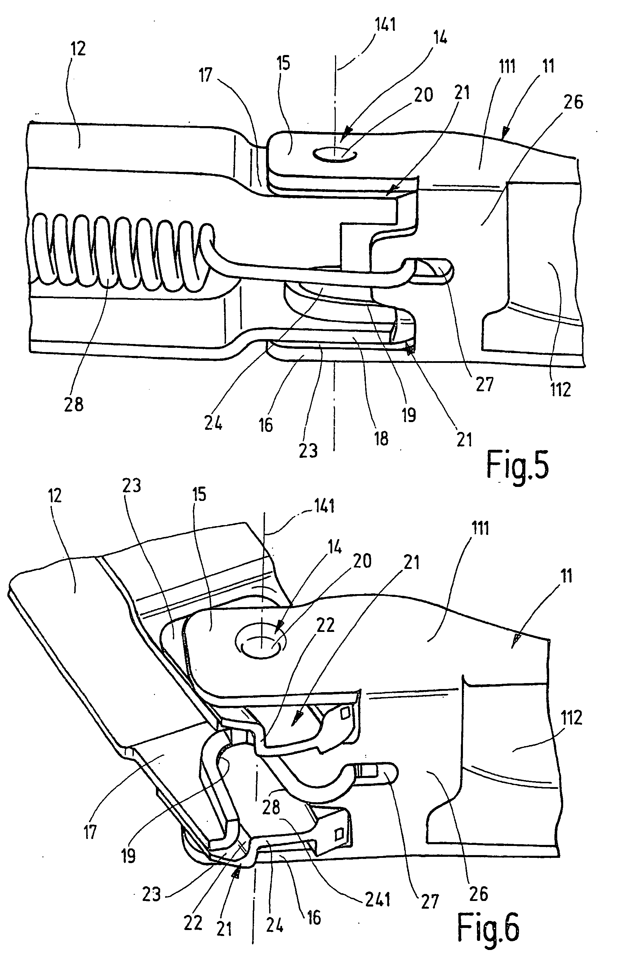

Der in Fig. 1 ausschnittweise in Draufsicht und in Fig. 5 und 6 in Unteransicht zu sehende Scheibenwischer weist ein Befestigungsteil 11 und einen nur abschnittweise dargestellten Wischerarm 12 auf. Wie hier nicht weiter dargestellt ist, ist das Befestigungsteil 11 mittels einer Buchse drehfest auf einer Abtriebswelle eines Wischergestänges aufgesteckt und mit einer Mutter gesichert, so daß es bei Einschalten des Wischermotors in eine hin- und hergehende Schwenkbewegung versetzt wird. Als Korrosionsschutz ist auf die Mutter eine Abdeckkappe 13 aus Kunststoff aufgeklipst. Der Wischerarm 12 ist über eine einen Freiheitsgrad aufweisende Gelenkverbindung 14 an dem Befestigungsteil 11 angekoppelt. Dabei liegt die Gelenkachse 141 in einer zur Schwenkebene des Befestigungsteils 11 parallelen Ebene und ist quer zur Längsachse des Wischerarms 12 ausgerichtet. Die Gelenkverbindung 14 stellt sicher, daß der Wischerarm 12 einerseits von dem Befestigungsteil 11 bei dessen Schwenkbewegung starr mitgenommen wird und sich andererseits lotrecht zu der Schwenkebene des Befestigungsteils 11 gegenüber dem Befestigungsteil 11 verschwenken läßt, so daß der Wischerarm 12 samt dem an seinem anderen Ende gehaltenen Wischblatt von der Fahrzeugscheibe abgehoben werden kann.

Die Gelenkverbindung 14 wird dadurch realisiert, daß Befestigungsteil 11 und Wischerarm 12 sich mit paarweise seitlich vorstehenden Wangen, die an den einander zugekehrten Enden von Befestigungsteil 11 und Wischerarm 12 ausgebildet sind, einander übergreifen, und daß an den Wangen ausgebildete U-förmige Ausnehmungen und angesetzte Rundzapfen, die in die Ausnehmungen eintauchen, zwei Schwenklager bilden, wie nachstehend noch im einzelnen beschrieben wird.

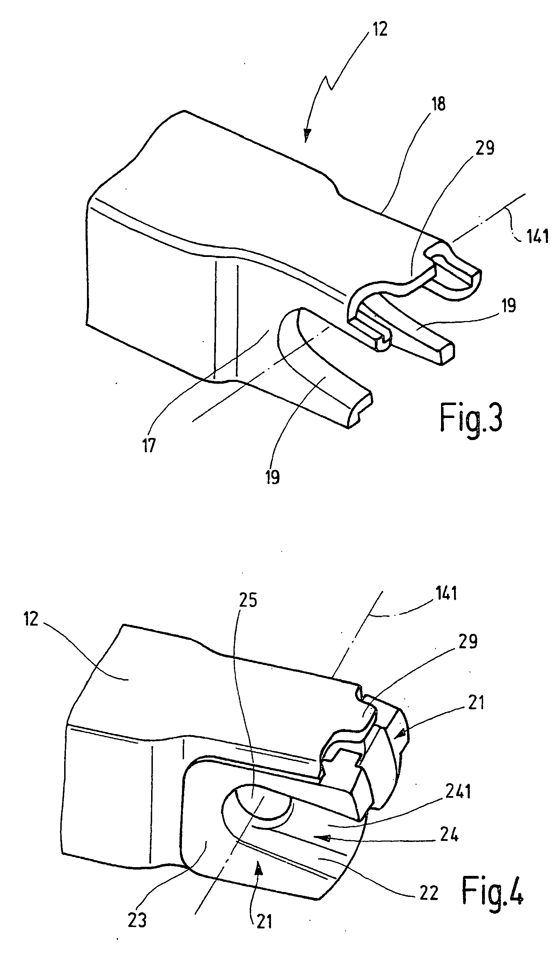

Das Befestigungsteil 11 ist kappenartig ausgebildet, wobei der Kappenrand 111 an dem dem Wischerarm 12 zugekehrten Ende des Befestigungsteils 11 in zwei seitliche Wangen 15, 16 ausläuft, die axial über den Kappenboden 112 des Befestigungsteils 11 vorstehen (vgl. auch Fig. 2). Der Wischerarm 12 weist ein auf der Unterseite offenes Kastenprofil auf, das an dem befestigungsteilseitigen Ende des Wischerarms 12 seitlich verjüngt ist. Die Seitenwände des verjüngten Wischerarmendes 12 bilden die Wangen 17, 18 eines zweiten Wangenpaars (vgl. auch Fig. 3). Infolge dieser Verjüngung des Kastenprofils am Wischerarmende übergreift beim Zusammensetzten von Befestigungsteil 11 und Wischerarm 12 das Wangenpaar 15, 16 am Befestigungsteil 11 das Wangenpaar 17, 18 am Wischerarm 12.

Wie Fig. 3 zeigt, weist jede Wange 17, 18 des am Wischerarm 12 angeordneten Wangenpaars eine sich axial erstreckende U-förmige Ausnehmung 19 auf, deren U-Öffnung mit dem freien Ende der Wangen 17, 18 zusammenfällt. Wie Fig. 2 zeigt, trägt jede Wange 15, 16 des am Befestigungsteil 11 angeordneten Wangenpaars einen Rundzapfen 20, der koaxial mit der Gelenkachse 141 ist und an der der Wange 17 bzw. 18 am Wischerarm 12 zugekehrten Innenfläche der Wange 15 bzw. 16 vorsteht. Der Rundzapfen 20 ist hohlzylindrisch ausgebildet und aus der Wange 15 bzw. 16 nach innen ausgeformt. Seine Länge ist etwas größer als die Dicke der Wange 17 bzw. 18 am Wischerarm 12, so daß die beiden Rundzapfen 20 durch die Ausnehmungen 19 in den Wangen 17, 18 hindurchzutauchen vermögen, ohne zu weit in das Innere des Wischerarms 12 hineinzuragen.

Wie Fig. 4 zeigt, ist in jeder Ausnehmung 19 eine Gleitscheibe 21 aus gleitfähigem Kunststoffmaterial eingeschoben oder eingeklipst. Diese Gleitscheibe 21 weist einen sich längs der Konturen der U-förmigen Ausnehmung 19 erstreckenden Umlaufrand 22 und einen die Wange 17 bzw. 18 übergreifenden Überlappungsrand 23 auf. Der Umlaufrand 22 wird dabei von den Wänden einer in der Gleitscheibe 21 ausgebildeten, rinnenartigen Vertiefung 24 gebildet, die formschlüssig in die U-förmige Ausnehmung 19 eintaucht, an einem Ende, das am Grund der Ausnehmung 19 liegt, bogenförmig verschlossen ist und am anderen Ende, das mit der U-Öffnung der Ausnehmung 19 zusammenfällt, frei ausläuft. Nahe des bogenförmig verschlossenen Endes der rinnenförmigen Vertiefung 24 ist im Boden 241 der Vertiefung 24 eine kreisrunde Einsenkung 25 eingeformt, in die der hohlzylindrische Rundzapfen 20 mit seinem freien Stirnende einzutauchen vermag.

Zur Montage des Scheibenwischers wird nach Einklipsen der Gleitscheiben 21 in die Ausnehmungen 19 in den Wangen 17, 18 am Wischerarm 12 das Befestigungsteil 11 mit seinen Wangen 15, 16 über die Wangen 17, 18 am Wischerarm 12 hinweggeschoben, wobei die beiden Rundzapfen 20 in den Vertiefungen 24 in den beiden Gleitscheiben 21 entlanggeführt werden. Die Rundzapfen 20 stützen sich dabei mit ihrer kreisringförmigen Stirnfläche am Boden 241 der Vertiefungen 24 ab und spreizen so etwas die Wangen 15, 16 auseinander. Am Ende der Einschiebewegung rasten die Rundzapfen 20 in die Einsenkungen 25 ein, können aber zwecks Demontage mit entsprechender Zugkraft wieder aus den Einsenkungen 25 unter Spreizen der Wangen 15, 16 ausgezogen werden. Die Überlappungsränder 23 der beiden Gleitscheiben 21 liegen zwischen den Wangen 15 und 17 bzw. 16 und 18 ein und sorgen für einen geringen Gelenkverschleiß. Die Vertiefung 24 sorgt mit ihrem durch die U-förmigen Ausnehmungen 19 hindurchragenden Umlaufrand 22 für eine größere Stützfläche für die Rundzapfen 20, so daß die Momente vom schwenkenden Befestigungsteil 11 gut aufgenommen werden können.

Wie in Fig. 5 und 6 zu sehen ist, ist auf der Unterseite des kappenförmigen Befestigungsteil 11 eine Querlasche 26 angeordnet, die sich zwischen zwei einander gegenüberliegenden Kappenrandabschnitten erstreckt und vorzugsweise einstückig mit dem Kappenrand 111 ausgeführt ist. Mittig in der Querlasche 26 ist ein Durchgangsloch 27 eingebracht; in das das eine Ende einer im Wischerarm 12 einliegenden Zugfeder 28 eingehängt ist. Das am Wischerarm 12 selbst angreifende andere Ende der Zugfeder 28 ist nicht dargestellt. In der in Fig. 5 dargestellten Arbeitslage des Scheibenwischers ist die Zugfeder 28 gespannt und zieht den Wischerarm 12 mit dem daran gehaltenen Wischblatt gegen die Fahrzeugscheibe. Gleichzeitig stellt die Zugkraft der Zugfeder 28 sicher, daß die Gleitscheiben 21 in den Ausnehmungen 19 und die Rundzapfen 20 in den Vertiefungen 24 in den Gleitscheiben 21 festgelegt bleiben.

Um eine unbeabsichtigte Demontage des Scheibenwischers, also ein Auseinanderfallen von Befestigungsteil 11 und Wischerarm 12, durch selbsttätiges Aushängen der Zugfeder 28 in einer bestimmten Schwenklage des Wischerarms 12, in welcher die Zugfeder 28 nicht mehr gespannt wird, zu verhindern, ist an dem befestigungsteilseitigen Ende des Wischerarms 12 eine Anschlagnase 29 (Fig. 1 und 4) ausgebildet, die so plaziert ist, daß sie beim Schwenken des Wischerarms 12 über eine Übertotpunktlage der Zugfeder 28 hinaus an der Querlasche 26 des Befestigungsteils 11 anschlägt und damit eine weitere Schwenkbewegung des Wischerarms 12, die zu einer Entspannung der Zugfeder 28 führen würde, verhindert.

Die Zugfeder 28 ist als preisgünstige gerade Schrauben-Zugfeder ausgebildet, da zwischen den einander gegenüberliegenden, das Gelenk zwischen Wischerarm 12 und Befestigungsteil 11 bildenden Rundzapfen 20 genügend Platz zum Durchtritt der Zugfeder 28 bzw. von deren Federende vorhanden ist.

Das Befestigungsteil 11 ist aus vorverzinktem Blech hergestellt, so daß die Aufbringung einer Korrosionsschutzschicht überflüssig ist. Der Wischerarm 12 mit seinem an der Unterseite offenen, kastenförmigen Profil und verjüngtem Profilende ist ebenfalls aus Blech hergestellt.

In einer alternativen Ausführungsform der Erfindung ist es selbstverständlich möglich, die Wangenpaare an Befestigungsteil 11 und Wischerarm 12 so auszubilden, daß die Wangen 17 ,18 am Wischerarm 12 die Wangen 15, 16 am Befestigungsteil 11 übergreifen. In diesem Fall weisen die Wangen 15, 16 am Befestigungsteil 11 die Ausnehmungen 19 auf, und die Wangen 17, 18 am Wischerarm 12 tragen die nach innen vorspringenden, hohlzylindrischen Rundzapfen 20. Auch kann die Zugfeder 28 durch ein anderes federelastisches Zugelement ersetzt werden, das an der Querlasche 26 und am Wischerarm 12 angreift und durch Spannen oder Dehnen eine Zugkraft zwischen Wischerarm 12 und Befestigungsteil 11 erzeugt.

## Patentansprüche

1. Scheibenwischer für Fahrzeugscheiben mit einem zur Schwenkbewegung antreibbaren Befestigungsteil (11) und einem Wischerarm (12), die sich mit an ihren einander zugekehrten Enden paarweise ausgebildeten Wangen (15, 16, 17, 18) übergreifen und über eine im Wangenbereich ausgebildete Gelenkverbindung mit einer parallel zur Schwenkebene des Befestigungsteils (11) und quer zur Längsachse des Wischerarms (12) ausgerichteten Gelenkachse (141) aneinander schwenkbeweglich festgelegt sind, sowie mit einem federelastischen Zugelement . (28), das einerseits am Befestigungsteil (11) und andererseits am Wischerarm (12) mit aufeinander zugerichteten Zugkräften angreift, wobei jede Wange (17, 18) des übergriffenen Wangenpaars eine sich axial erstreckende U-förmige Ausnehmung (19) mit einem offenen und einem geschlossenen Ende aufweist und jede Wange (15, 16) des übergreifenden Wangenpaars einen auf ihrer der Wange (17, 18) des übergriffenen Wangenpaars zugekehrten Innenfläche vorspringenden, zur Gelenkachse (141) koaxialen Rundzapfen (20) trägt und die beiden Rundzapfen (20) in die beiden Ausnehmungen (19) eintauchen und von der Zugkraft des federelastischen Zugelements (28) gegen das geschlossene Ende der U-förmigen Ausnehmungen (19) gezogen sind, **dadurch gekennzeichnet, dass** zwischen jeweils zwei der sich übergreifenden Wangen (15, 17 bzw.16, 18) von Befestigungsteil (11) und Wischerarm (12) eine Gleitscheibe (21), vorzugsweise aus gleitfähigem Kunststoffmaterial, einliegt, die einen in die Ausnehmung (19) eintauchenden Umlaufrand (22) aufweist, der sich entlang der Kontur der Ausnehmung (19) erstreckt und den in die Ausnehmung (19) hineinragenden Rundzapfen (20) aufnimmt

2. Scheibenwischer nach Anspruch 1, **dadurch gekennzeichnet, dass** der Umlaufrand (22) von den Wänden einer in die Ausnehmung (19) eingeschobenen oder eingeklipsten, rinnenartigen Vertiefung (24) in der Gleitscheibe (21) gebildet ist, die an einem Ende bogenförmig verschlossen ist und am anderen Ende frei ausläuft.

3. Scheibenwischer nach Anspruch 2, **dadurch gekennzeichnet, dass** am bogenförmig verschlossenen Ende der Vertiefung (24) im Boden (241) der Vertiefung (24) eine kreisrunde Einsenkung (25) eingeformt ist, in die der Rundzapfen (20) mit seinem freien Ende vorzugsweise formschlüssig hineinragt.

4. Scheibenwischer nach einem der Ansprüche 1 bis 3, **dadurch gekennzeichnet, dass** Befestigungsteil (11) und/oder Wischerarm (12) aus Blech hergestellt sind.

5. Scheibenwischer nach Anspruch 4, **dadurch gekennzeichnet, dass** das Blech vorverzinkt ist.

6. Scheibenwischer nach einem der Ansprüche 1 bis 5, **dadurch gekennzeichnet, dass** die Wangen (15,16 bzw. 17, 18) einstückig mit Befestigungsteil (11) bzw. Wischerarm (12) ausgebildet sind.

7. Scheibenwischer nach einem der Ansprüche 1 bis 6, **dadurch gekennzeichnet, dass** die Rundzapfen (20) hohlzylindrisch und einstückig aus den Wangen (15, 16) ausgeformt sind.

8. Scheibenwischer nach einem der Ansprüche 1 bis 7, **dadurch gekennzeichnet, dass** das übergreifende Wangenpaar (15, 16) dem Befestigungsteil (11) und das übergriffene Wangenpaar (17,18) dem Wischerarm (12) zugeordnet ist

9. Scheibenwischer nach einem der Ansprüche 1 bis 8, **dadurch gekennzeichnet, dass** das Befestigungsteil (11) kappenartig ausgebildet ist und der Kappenrand (111) an einem Ende des Befestigungsteils (11) in die über den Kappenboden (112) vorspringenden Wangen (15, 16) ausläuft und dass an der vom Kappenboden (112) abgekehrten Unterseite des Befestigungsteils (11) eine Querlasche (26) angeordnet ist, die sich zwischen zwei einander gegenüberliegenden Kappenrandabschnitten erstreckt.

10. Scheibenwischer nach Anspruch 9, **dadurch gekennzeichnet, dass** der Wischerarm (12) ein auf der Unterseite offenes Kastenprofil aufweist, und dass das federelastische Zugelement (28) in dem Wischerarm (12) einliegt und mit einem Ende an der Querlasche (26) festgelegt ist.

11. Scheibenwischer nach Anspruch 10, **dadurch gekennzeichnet, dass** die Querlasche (26) ein mittig eingebrachtes Durchgangsloch (27) aufweist und dass das federelastische Zugelement eine Zugfeder (28), vorzugsweise eine gerade Schrauben-Zugfeder, ist, die mit ihrem einen Federende in dem Durchgangsloch (27) eingehängt ist.

12. Scheibenwischer nach einem der Ansprüche 9 bis 11, **dadurch gekennzeichnet, dass** am wangenseitigen Ende des Wischerarms (12) eine Anschlagnase (29) so angeordnet ist, dass sie beim Schwenken des Wischerarms (12) über die Totpunktlage des federelastischen Zugelements (28) hinaus an der Querlasche (26), ein Weiterschwenken des Wischerarms (12) blockierend, anschlägt.

## Claims

1. Window wiper for vehicle windows, with a fastening part (11) which can be driven in order to provide a pivoting movement, and with a wiper arm (12), said fastening part and wiper arm overlapping by means of cheeks (15, 16, 17, 18), which are formed in pairs at their mutually facing ends, and being fixed pivotably to each other via an articulated connection which is formed in the cheek region and has an axis of articulation (141) oriented parallel to the pivoting plane of the fastening part (11) and transversely with respect to the longitudinal axis of the wiper arm (12), and with a spring-elastic tension element (28) which acts at one end on the fastening part (11) and at the other end on the wiper arm (12) with tensile forces which are directed toward each other, wherein each cheek (17, 18) of the overlapped pair of cheeks has an axially extending, U-shaped recess (19) with an open and a closed end, and each cheek (15, 16) of the overlapping pair of cheeks supports a round pin (20) which projects on the inner surface of said cheek, said inner surface facing the cheek (17, 18) of the overlapped pair of cheeks, and is coaxial with respect to the axis of articulation (141), and the two round pins (20) enter the two recesses (19) and are pulled against the closed end of the U-shaped recesses (19) by the tensile force of the spring-elastic tension element (28), **characterized in that** a sliding disc (21), preferably made of slidable plastics material, is placed between in each case two of the overlapping cheeks (15, 17 or 16, 18) of fastening part (11) and wiper arm (12), said sliding disc having an encircling edge (22) which enters the recess (19), extends along the contour of the recess (19) and receives the round pin (20) which projects into the recess (19).

2. Window wiper according to Claim 1, **characterized in that** the encircling edge (22) is formed by the walls of a channel-like depression (24) in the sliding disc (21), which depression is pushed or clipped into the recess (19), is closed in a curved manner at one end and peters out freely at the other end.

3. Window wiper according to Claim 2, **characterized in that** a circular hollow (25) into which the round pin (20) projects at its free end, preferably in a form-fitting manner, is formed in the base (241) of the depression (24) at that end of the depression (24) which is closed in a curved manner.

4. Window wiper according to one of Claims 1 to 3, **characterized in that** the fastening part (11) and/or wiper arm (12) is/are produced from sheet metal.

5. Window wiper according to Claim 4, **characterized in that** the sheet metal is galvanized in advance.

6. Window wiper according to one of Claims 1 to 5, **characterized in that** the cheeks (15, 16 and 17, 18) are formed integrally with the fastening part (11) and wiper arm (12), respectively.

7. Window wiper according to one of Claims 1 to 6, **characterized in that** the round pins (20) are formed from the cheeks (15, 16) in a hollow-cylindrical and integral manner.

8. Window wiper according to one of Claims 1 to 7, **characterized in that** the overlapping pair of cheeks (15, 16) is assigned to the fastening part (11) and the overlapped pair of cheeks (17, 18) is assigned to the wiper arm (12).

9. Window wiper according to one of Claims 1 to 8, **characterized in that** the fastening part (11) is designed in the manner of a cap, and the cap edge (111) peters out at one end of the fastening part (11) into the cheeks (15, 16) which project over the cap base (112), and **in that** a transverse tab (26) which extends between two mutually opposite cap edge sections is arranged on the lower side of the fastening part (11), which side faces away from the cap base (112).

10. Window wiper according to Claim 9, **characterized in that** the wiper arm (12) has a box profile which is open on the lower side, and **in that** the spring-elastic tension element (28) is located in the wiper arm (12) and is fixed at one end to the transverse tab (26).

11. Window wiper according to Claim 10, **characterized in that** the transverse tab (26) has a centrally inserted passage hole (27), and **in that** the spring-elastic tension element is a tension spring (28), preferably a rectilinear helical tension spring, which is fitted at its one spring end in the passage hole (27).

12. Window wiper according to one of Claims 9 to 11, **characterized in that** a stop lug (29) is arranged at the cheek end of the wiper arm (12) in such a manner that, when the wiper arm (12) pivots beyond the dead centre position of the spring-elastic tension element (28), said stop lug strikes against the transverse tab (26) blocking further pivoting of the wiper arm (12).

## Revendications

1. Essuie-glace de vitre de véhicule automobile comportant une pièce de fixation (11) entraînée pour effectuer un mouvement de pivotement et un bras d'essuie-glace (12), ces pièces se chevauchant par leurs extrémités tournées l'une vers l'autre, par des joues (15, 16, 17, 18) réalisées par paires, et fixées de manière mobile en pivotement l'une à l'autre par une liaison articulée réalisée dans la zone des joues, à l'aide d'un axe d'articulation (141) parallèle à l'axe de pivotement de la pièce de fixation (11) et transversal à l'axe longitudinal du bras d'essuie-glace (12), ainsi qu'un élément de traction (28) ayant l'élasticité d'un ressort, appliqué à une extrémité contre la pièce de fixation (11) et à l'autre extrémité contre le bras d'essuie-glace (12), par des forces de traction dirigées l'une vers l'autre,
chaque joue (17, 18) de la paire de joues chevauchée comporte une cavité en forme de U (19), s'étendant axialement, ayant une extrémité ouverte et une extrémité fermée, et
chaque joue (15, 16) de la paire de joues qui chevauche sur ses surfaces intérieures tournées vers les joues 17, 18 de la paire de joues chevauchées, porte un goujon rond (20), coaxial à l'axe d'articulation (141), ce goujon étant en saillie de la surface intérieure tournée vers la paire de joues chevauchées (17, 18), et les deux goujons ronds (20) pénètrent dans les deux cavités (19) et sont tirés contre l'extrémité fermée des cavités (19) en forme de U par la force de traction de l'élément de traction (28) ayant l'élasticité d'un ressort,
**caractérisé en ce qu'**
entre chaque fois deux joues qui se chevauchent (15, 17 ou 16, 18) de la pièce de fixation (11) et du bras d'essuie-glace (12), on a inséré une rondelle de glissement (21) de préférence en une matière plastique lubrifiante, comportant un bord périphérique (22) pénétrant dans la cavité (19), ce bord s'étendant le long du contour de la cavité (19) et recevant le goujon rond (20) pénétrant dans la cavité (19).

2. Essuie-glace selon la revendication 1,
**caractérisé en ce que**
le bord périphérique (22) est formé par les parois d'une cavité (24) en forme de gorge, engagée ou enclipsée dans la cavité (19) et appartenant à la rondelle de glissement (21), en étant fermée à une extrémité par une forme d'arc, l'autre extrémité se terminant librement.

3. Essuie-glace selon la revendication 2,
**caractérisé en ce que**
l'extrémité fermée en forme d'arc de la cavité (24) comporte dans le fond (241) de la cavité (24) une cavité (25) circulaire, dans laquelle pénètre le goujon rond (20) avec son extrémité libre, de préférence par une liaison par la forme.

4. Essuie-glace selon l'une des revendications 1 à 3,
**caractérisé en ce que**
la pièce de fixation (11) et/ ou le bras d'essuie-glace (12) sont fabriqués en tôle.

5. Essuie-glace selon la revendication 4,
**caractérisé en ce que**
la tôle est préalablement étamée.

6. Essuie-glace selon l'une des revendications 1 à 5,
**caractérisé en ce que**
les joues (15, 16 ou 17, 18) sont réalisées en une seule partie avec la pièce de fixation (11) ou le bras d'essuie-glace (12).

7. Essuie-glace selon l'une des revendications 1 à 6,
**caractérisé en ce que**
les goujons ronds (20) ont une forme cylindrique creuse et sont réalisés en une seule pièce dans les joues (15, 16).

8. Essuie-glace selon l'une des revendications 1 à 7,
**caractérisé en ce que**
la paire de joues (15, 16) qui chevauche est associée à la pièce de fixation (11) et la paire de joues (17, 18) chevauchée est associée au bras d'essuie-glace (12).

9. Essuie-glace selon l'une des revendications 1 à 8,
**caractérisé en ce que**
la pièce de fixation (11) est en forme de capuchon et le bord (111) du capuchon se termine à une extrémité de la pièce de fixation (11) par les joues (15, 16) qui dépassent du fond (112) du capuchon, et
le côté inférieur de la pièce de fixation (11) à l'opposé du fond de capuchon (112) comporte une patte transversale (26) qui s'étend entre deux segments de bord de capuchon qui se font face.

10. Essuie-glace selon la revendication 9,
**caractérisé en ce que**
le bras d'essuie-glace (12) a un profil en caisson dont la face inférieure est ouverte, et
l'élément de traction (28) élastique comme un ressort est logé dans le bras d'essuie-glace (12) et une extrémité est fixée à la patte transversale (26).

11. Essuie-glace selon la revendication 10,
**caractérisé en ce que**
la patte transversale (26) comporte un orifice traversant (27) en son milieu, et
l'élément de traction élastique comme un ressort est un ressort de traction (28) de préférence un ressort hélicoïdal droit de traction, dont une extrémité est accrochée dans l'orifice traversant (27).

12. Essuie-glace selon l'une des revendications 9 à 11,
**caractérisé en ce que**
l'extrémité du bras d'essuie-glace (12) du côté des joues comporte un bec de butée (29) de façon qu'au basculement du bras d'essuie-glace (12) au-delà de la position de point mort haut de l'élément de traction (28) élastique comme un ressort, ce bec bute contre la patte transversale (26) et arrête le basculement du bras d'essuie-glace (12).
